# EUROPEAN PATENT SPECIFICATION

(11) **EP 3 557 833 B1**
(45) Date of publication and mention of the grant of the patent: **23.02.2022**
(21) Application number: 17882569.1
(22) Date of filing: 09.11.2017
(51) Int. Cl.: H04L 29/06, F24F 11/54, F24F 11/57, F24F 11/58, F24F 11/62, H04L 12/28, H04L 29/08

(54) **COMMUNICATION CONTROL DEVICE AND FACILITY COMMUNICATION SYSTEM**
KOMMUNIKATIONSSTEUERUNGSVORRICHTUNG UND ANLAGENKOMMUNIKATIONSSYSTEM
DISPOSITIF DE COMMANDE DE COMMUNICATION ET SYSTÈME DE COMMUNICATION D'INSTALLATION

(30) Priority: 19.12.2016 JP 2016245284
(43) Date of publication of application: 23.10.2019
(73) Proprietor: Hitachi-Johnson Controls Air Conditioning, Inc., Tokyo 105-0022 (JP)
(72) Inventor: MACHIDA, Yoshihiro, Tokyo 100-8280 (JP)
(74) Representative: MERH-IP Matias Erny Reichl Hoffmann Patentanwälte PartG mbB
(86) International application number: PCT/JP2017/040449
(87) International publication number: WO 2018/116684

(56) References cited:
- EP-A1- 1 760 952
- JP-A- H10 178 493
- JP-A- 2000 124 929
- US-A1- 2013 215 905
- US-A1- 2014 269 744
- US-A1- 2016 121 816
- US-A1- 2016 121 816

## Description

### TECHNICAL FIELD

The present invention relates to a communication control device and an equipment communication system.

### BACKGROUND ART

A communication network for industrial equipment handles, as information to be transmitted, a small volume of information such as an equipped instrument operation state and an equipped instrument control command. Thus, the method for reducing a cost by means of low-speed serial communication as compared to the Internet has been known. Moreover, in recent years, functionality of an equipped instrument and diversification of transmission information have been advanced.

Patent Document International Patent No: 2014-181427 describes a method in which an air-conditioning management device monitors an operation state for multiple air-conditioners and update software is distributed to the stopped air-conditioner.
Patent Document US 2014/269744 describes an oil field process control system including a field versatile control gateway component that interfaces with a plurality of field devices using a broad range of hardwired and wireless protocols.
Patent Document US 2016/121816 describes a controller area network (CAN) communication method for electronic devices of a vehicle which includes: transmitting data using a data frame in which communication mode information designating high speed CAN communication processing or general CAN communication processing is inserted into a null bit or a reserved bit that is not used in a general CAN communication protocol; receiving the transmitted data; and processing the received data in a high speed CAN communication mode or a general CAN communication mode based on the communication mode information.

### CITATION LIST

### PATENT DOCUMENT

Patent Document 3 : International Patent No. 2014-181472
Patent Document 1 : US 2014/269744 A1
Patent Document 2 : US 2016/121816 A1

### SUMMARY OF THE INVENTION

### PROBLEMS TO BE SOLVED BY THE INVENTION

The present invention is defined by the appended independent claims. Dependent claims constitute embodiments of the invention.

Regarding an equipped device placed in a building, there is a case where multiple devices having a communication capacity with the same communication speed are adopted at once around the same time, but old products and new products are often adopted in a mixed manner. For example, the old product is compatible only with low-speed communication, but the new product is also compatible with high-speed communication. Even under such environment that the equipped devices with various communication speeds are mixed, proper operation needs to be performed.

If communication is performed only via the low-speed communication compatible with both of the old product and the new product, connection is ensured, but a high-speed communication function of the new product is not used. Thus, a communication network utilization efficiency is decreased.

When only the high-speed communication function is continuously utilized, the communication network utilization efficiency is increased, but an air-conditioning system control signal which can be transmitted only via the low-speed communication is restricted by the high-speed communication. As a result, arrival of a control signal (e.g., an air-conditioner temperature change signal) needing to be promptly reflected on the equipped device is delayed, leading to user's strong inconvenience. As described above, for utilization of the equipment network connecting the equipped devices, both of improvement of a communication efficiency and reliable transmission of an important signal need to be realized.

However, a typical technique such as the technique described in Patent Document 3 is unsuitable for the problem on improvement of convenience of the equipment network under the environment where the equipped devices with various communication speeds are mixed.

Patent Document 3 describes the processing of distributing the software when the air-conditioner is stopped. However, even when the air-conditioner is in operation, there is communicable spare time on the equipment network. Such spare time is not utilized, and therefore, an equipment network communication efficiently is still low. Moreover, for an air-conditioner operating for 24 hours, no stop period is present in the first place.

Thus, a main object of the present invention is to improve convenience of an equipment network under environment where equipped devices with various communication speeds are mixed.

### SOLUTIONS TO THE PROBLEMS

For solving the above-described problems, a communication control device of the present invention has the a configuration according to claim 1 Dependent claims constitute embodiments of the invention.

Other sections will be described later.

### EFFECTS OF THE INVENTION

According to the present invention, the convenience of the equipment network can be improved under the environment where the equipped devices with various communication speeds are mixed.

### BRIEF DESCRIPTION OF THE DRAWINGS

Fig. 1 is a configuration diagram of an equipment communication system according to one embodiment of the present invention.
Fig. 2 is a device management table of the equipment communication system according to one embodiment of the present invention.
Fig. 3 is a detailed configuration diagram of each equipped device of the equipment communication system according to one embodiment of the present invention.
Fig. 4 is a diagram for describing a packet exchanged in the equipment communication system according to one embodiment of the present invention.
Fig. 5 is a chart for describing a communication mode of an equipment network according to one embodiment of the present invention.
Fig. 6 is a sequence chart of one-to-one communication among the equipped devices according to one embodiment of the present invention.
Fig. 7 is a sequence chart of multicast communication among the equipped devices according to one embodiment of the present invention.
Fig. 8 is a sequence chart of inquiry processing for each device of the equipment communication system according to one embodiment of the present invention.
Fig. 9 is a component graph of a communication volume of the equipment communication system according to one embodiment of the present invention in chronological order.
Fig. 10 is a chart of the processing of dividing and transmitting a packet subjected to high-speed data distribution according to one embodiment of the present invention.
Fig. 11 is a sequence chart of packet division transmission processing according to one embodiment of the present invention.
Fig. 12 is a flowchart of transmission/reception processing of a low-speed device according to one embodiment of the present invention.
Fig. 13 is a flowchart of details of transmission packet production processing according to one embodiment of the present invention.
Fig. 14 is a flowchart of details of packet transmission processing according to one embodiment of the present invention.
Fig. 15 is a flowchart of reception processing of a high-speed device according to one embodiment of the present invention.
Fig. 16 is a flowchart of initial transmission processing when transmission processing of the high-speed device according to one embodiment of the present invention is continuously performed multiple times.
Fig. 17 is a flowchart of second high-speed device transmission processing or later according to one embodiment of the present invention.
Fig. 18 is a flowchart of data division processing based on the communication volume of the equipment communication system according to one embodiment of the present invention.

### DESCRIPTION OF EMBODIMENTS

Hereinafter, one embodiment of the present invention will be described in detail with reference to the drawings.

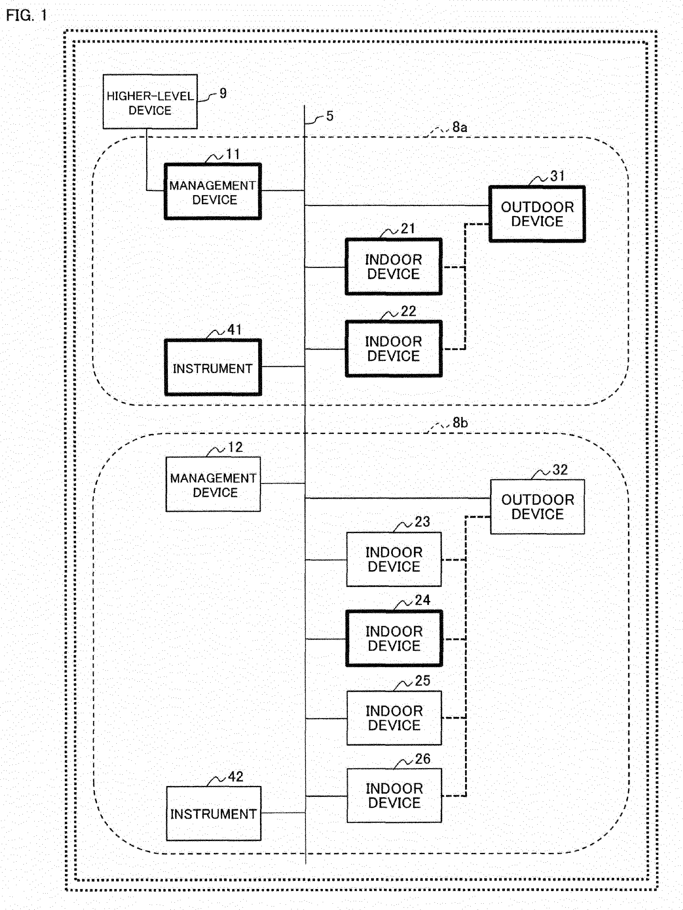

Fig. 1 is a configuration diagram of an equipment communication system. The equipment communication system includes a higher-level device 9 configured to manage equipment across the entirety of a building and each equipped device connected to an equipment network 5.

Each equipped device described herein is a collective term of indoor devices 21 to 26 of an air-conditioner, outdoor devices 31, 32 of the air-conditioner, instruments 41, 42 such as a lighting instrument and a security instrument, and management devices 11, 12 configured to manage each of these devices.

Each equipped device is configured as a computer having a central processing unit (CPU), a memory, a storage section (a storage device) such as a hard drive, and a network interface.

The computer is configured such that the CPU executes a program (also referred to as an application or other applications) read on the memory to operate a controller (a control section) including each processing device.

The higher-level device 9 is connected to the management device 11 via a network different from the equipment network 5. The higher-level device 9 transmits, for example, an instrument control command to the management device 11 to optimize power consumption across the entirety of the building, thereby controlling each equipped device from the management device 11 via the equipment network 5.

Note that each equipped device connected to the equipment network 5 can perform transmission/reception in both directions (an optional direction). For example, an air-conditioner temperature adjustment signal is transmitted from the management device 11 to the indoor device 21, and indoor temperature information is notified from the indoor device 21 to the management device 11.

The equipment network 5 is a network via which communication can be performed with multiple communication modes being switched in chronological order. The equipment network 5 is, for example, switchable between low-speed communication as a first communication mode and high-speed communication as a second communication mode. During the period of time for the low-speed communication, an important control signal such as the air-conditioner temperature adjustment signal is transmitted. During the period of time for the high-speed communication, a large volume of data such as the latest version of air-conditioner firmware is transmitted. As in these examples, data contents corresponding to each communication mode are transmitted so that the equipment network 5 can be effectively utilized.

Switching of the communication mode as described herein is based on a normal communication mode. When the trigger of changing the communication mode is generated, the communication mode is switched to another mode. Note that the low-speed communication will be hereinafter described as the normal communication mode, and the high-speed communication will be hereinafter described as the communication mode associated with the trigger. On the other hand, the high-speed communication may be taken as the normal communication mode, and the low-speed communication may be taken as the communication mode associated with the trigger.

Each equipped device of the equipment communication system is categorized into any of a low-speed device corresponding only to the low-speed communication and a high-speed device corresponding to both of the low-speed communication and the high-speed communication. In other words, communication environment where the low-speed device as an old equipped device corresponding only to the low-speed communication and the high-speed device as an upwardly-compatible new equipped device also corresponding to the high-speed communication are mixed is the equipment communication system.

Note that in Fig. 1, those surrounded by thick rectangular lines indicate the high-speed devices (e.g., the indoor device 21), and those surrounded by thin rectangular lines indicate the low-speed devices (e.g., the indoor device 23).

In Fig. 1, each equipped device is sorted into two groups.

A first group 8a includes the management device 11, the indoor devices 21, 22, the outdoor device 31, and the instrument 41. A second group 8b includes the management device 12, the indoor devices 23 to 26, the outdoor device 32, and the instrument 42.

Each group is an assembly of equipped devices belonging to the same refrigerant system. The indoor devices 21, 22 and the outdoor device 31 are connected to each other via a first refrigerant pipe (indicated by a dashed line) for supplying refrigerant gas. The indoor devices 23 to 26 and the outdoor device 32 are connected to each other via a second refrigerant pipe (indicated by a dashed line) for supplying refrigerant gas.

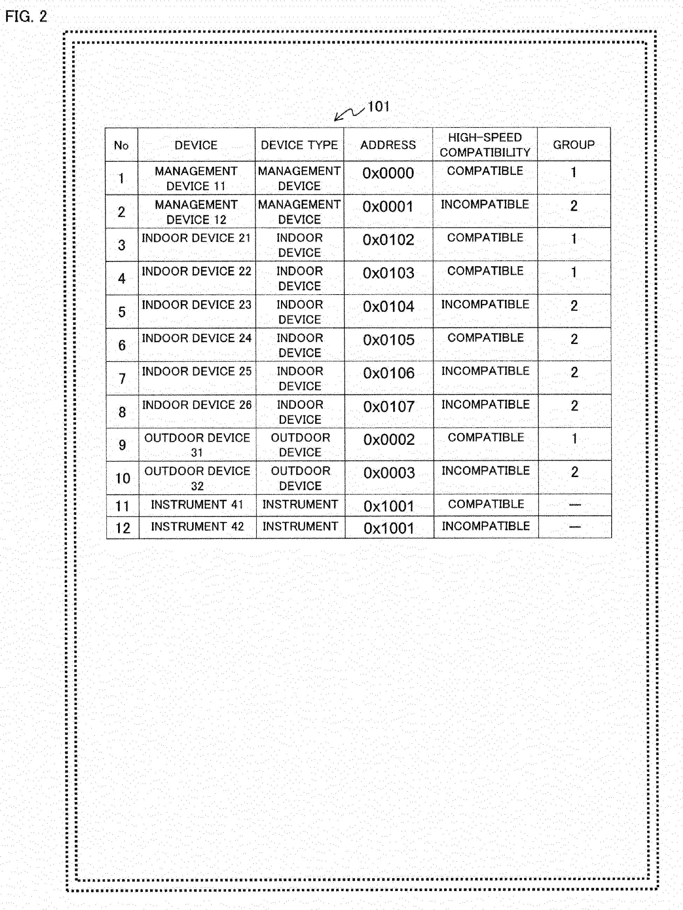

Fig. 2 is a device management table of the equipment communication system. In the device management table, a device type, an individual device address, the compatibility with the high-speed communication ("COMPATIBLE" indicates a compatible high-speed device, and "INCOMPATIBLE" indicates an incompatible low-speed device), and the group to which the device belongs are described for each equipped device illustrated in the equipment communication system of Fig. 1.

The device management table is stored in each equipped device. Note that the contents of the device management table stored in each equipped device may be all entries of the table, or may exclude an entry of a device which is not a communication partner of the device itself. The device which is not the communication partner is the same type of device as a subject device, such as the indoor device 22 for the indoor device 21 as the subject device.

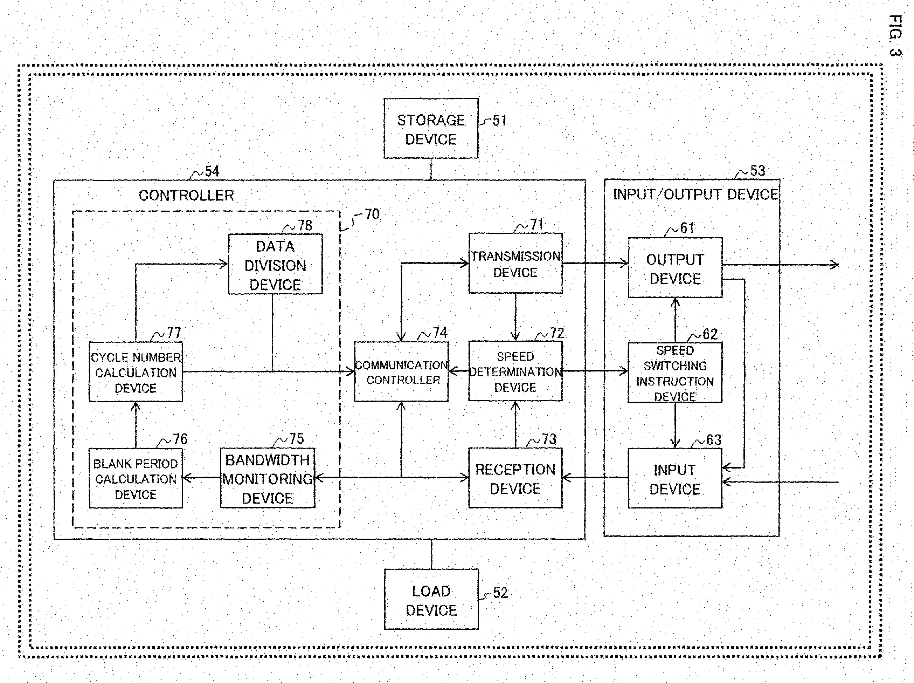

Fig. 3 is a detailed configuration diagram of each equipped device of the equipment communication system. The equipped device illustrated in Fig. 3 includes, in a single housing, a low-speed device mechanism, a high-speed device mechanism, and a bandwidth control device (communication control device) mechanism (a bandwidth controller 70).

The equipped device has a storage device 51, a load device 52, an input/output device 53, and a controller 54.

When the equipped device is operated as the "low-speed device," the input/output device 53 may include an output device 61 and an input device 63, and the controller 54 may include a transmission device 71, a reception device 73, and a communication controller 74.

When the equipped device is operated as the "high-speed device," the input/output device 53 may include, in addition to the low-speed device mechanism, a speed switching instruction device 62, and the controller 54 may include a speed determination device 72.

When the equipped device is operated as a "bandwidth control device," the controller 54 may include, as the bandwidth controller 70, a bandwidth monitoring device 75, a blank period calculation device 76, a cycle number calculation device 77, and a data division device 78 in addition to the high-speed device mechanism.

The load device 52 is, for example, a display in the case of the "management device" as the device type, a fan in the case of the "indoor device" as the device type, a compressor in the case of the "outdoor device" as the device type, and an illumination lamp or an imaging sensor in the case of the "instrument" as the device type. The storage device 51 stores various parameters regarding the load device 52, such as a fan rotation speed.

First, the low-speed device will be described. As described below, the low-speed device has a basic communication function for packet transmission/reception.

The input device 63 notifies the reception device 73 of a packet received from the equipment network 5. When data of the packet to be transmitted is notified from the transmission device 71, the output device 61 transmits the packet containing the notified data to the equipment network 5. Note that the packet to be transmitted is also returned to the input device 63 so that the communication controller 74 can check whether or not the packet has been correctly output.

The communication controller 74 executes the processing of data access to the storage device 51 and the processing of control for the load device 52 based on reception information on the packet received from the reception device 73. Further, the communication controller 74 outputs the data to be notified to other devices to the output device 61 via the transmission device 71. Note that the communication controller 74 may voluntarily transmit the packet based on the state of the load device 52.

Next, the high-speed device will be described. The high-speed device is switchable between the high-speed communication and the low-speed communication to communicate with the low-speed device by means of the low-speed communication and communicate with the high-speed device by means of the high-speed communication.

The speed determination device 72 determines, based on a speed switching trigger signal received from the reception device 73, whether or not the low-speed communication and the high-speed communication are to be switched from each other. This determination result is notified to the communication controller 74 and the speed switching instruction device 62 from the speed determination device 72.

The speed switching instruction device 62 instructs the output device 61 and the input device 63 to switch the low-speed communication to the high-speed communication for packet transmission/reception, thereby implementing the high-speed communication. Note that the communication controller 74 may generate, instead of receiving a trigger signal from the outside, the trigger of switching the low-speed communication to the high-speed communication when the device itself needs the high-speed communication.

Next, the bandwidth controller 70 will be described. The bandwidth controller 70 determines a period for performing the low-speed communication and a period for performing the high-speed communication to control the bandwidth of the equipment network 5. Note that the equipped device including the bandwidth controller 70 is not limited to the management device 11, and another optional device type such as the indoor device 21, the outdoor device 31, or the instrument 41 may be employed.

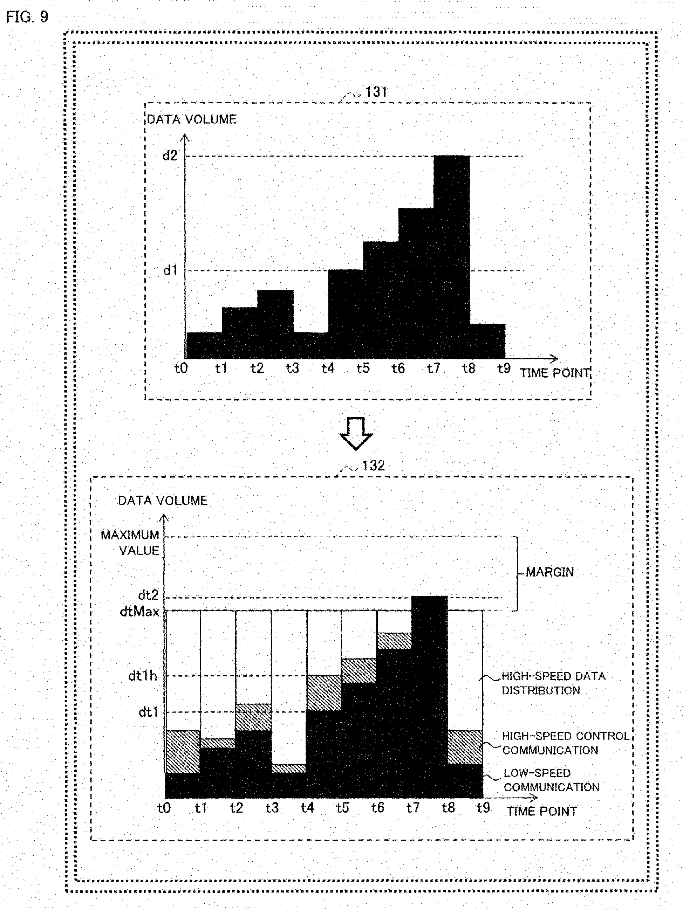

The bandwidth monitoring device 75 monitors, via the reception device 73, the volume of communication for transmission/reception via the equipment network 5 (for details, see a reference numeral 131 of Fig. 9). The communication volume targeted for monitoring includes not only the volume of communication for transmission/reception by the device itself, but also the volume of communication for transmission/reception by other instruments.

The blank period calculation device 76 calculates the blank period of the equipment network 5 based on the communication volume monitored by the bandwidth monitoring device 75 (for details, see a reference numeral 132 of Fig. 9). The "blank period" described herein corresponds not only to a data absent period for which no packet flows, but also to a period for which a few packets flow but there is room for a communication bandwidth (a communication capacity). That is, the blank period calculation device 76 calculates an extra communication volume as a result obtained by subtraction of the currently-used communication volume monitored by the bandwidth monitoring device 75 from the upper limit of the communication volume corresponding to the equipment network 5, and as the blank period, takes a period for which the extra communication volume is present.

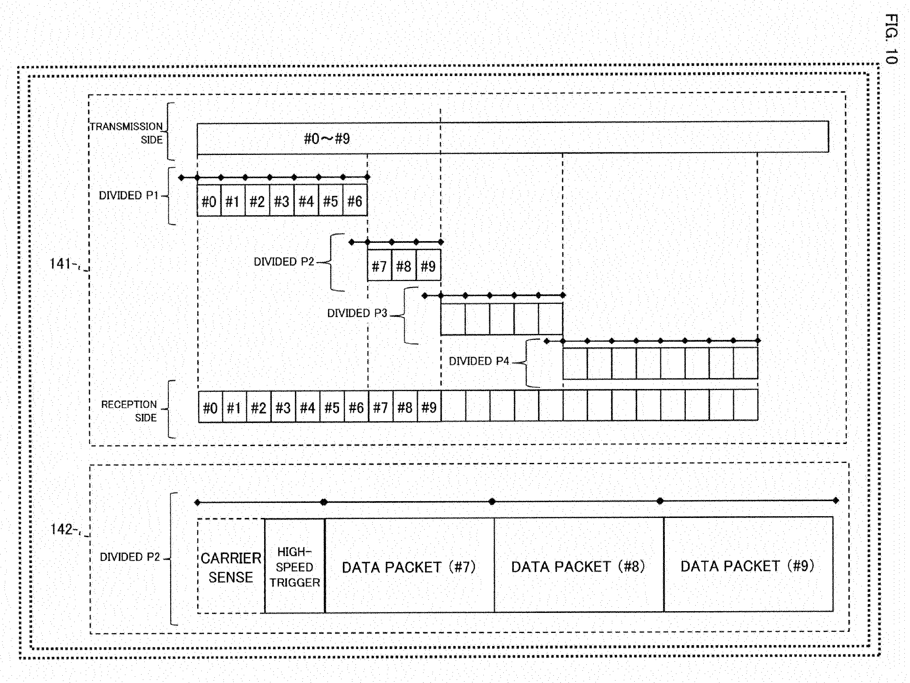

The cycle number calculation device 77 calculates, based on the communication network blank period calculated by the blank period calculation device 76, the cycle of transmission/reception for performing the high-speed communication (for details, see a reference numeral 141 of Fig. 10). The "cycle" described herein is a unit for data communication assignment in the blank period. Assignable cycles increase as the extra communication volume of the blank period increases.

The data division device 78 divides, based on the number of cycles calculated by the cycle number calculation device 77, transmission target data stored in the storage device 51 (for details, see a reference numeral 142 of Fig. 10). The divided data pieces are each contained in separate packets, and are separately transmitted. That is, the communication controller 74 on a transmission side controls the input/output device 53 such that the communication data divided by the data division device 78 is transmitted based on the number of cycles calculated by the cycle number calculation device 77. Moreover, the communication controller 74 on a reception side recovers a single piece of data before division from the group of divided packets.

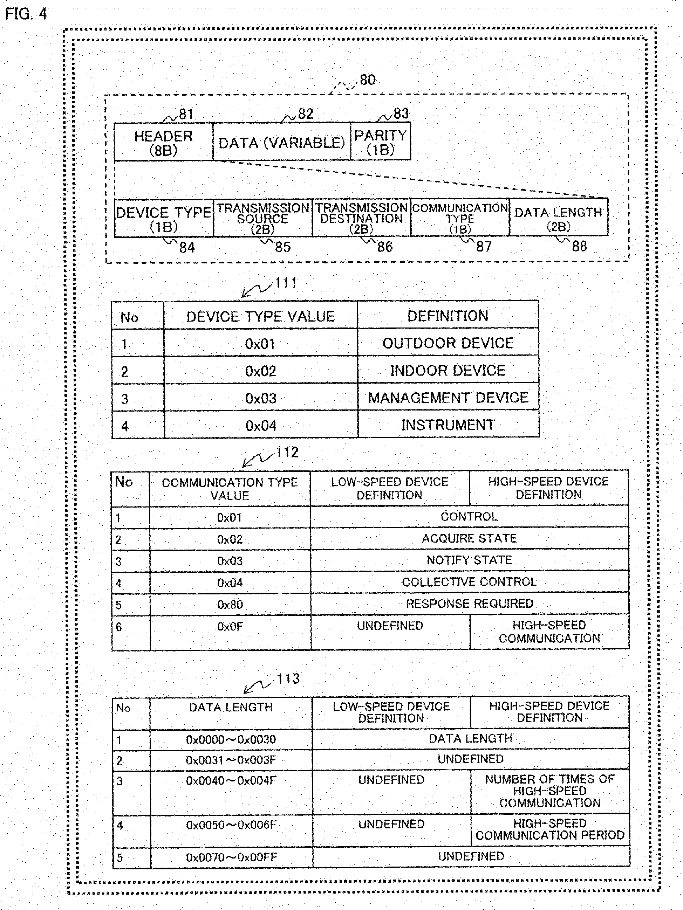

Fig. 4 is a diagram for describing the packet exchanged in the equipment communication system. A packet format 80 includes, in the order from the top, a header field 81, a data field 82, and a parity field 83. Note that parentheses in each field of the packet format 80 indicate a data volume (a unit B: byte) in each field. For example, the header field 81 has a fixed length of 8 bytes, and the data field 82 has a variable length.

The header field 81 further includes a device type field 84, a transmission source address field 85, a transmission destination address field 86, a communication type field 87, and a data length field 88. The data length field 88 indicates the data length of the data field 82.

Note that the same data format may be used for the low-speed communication and the high-speed communication. In the case of performing the high-speed communication, the high-speed device may transmit, after the header field 81 has been transmitted by means of the low-speed communication, the subsequent data field 82 and the subsequent parity field 83 with the low-speed communication being switched to the high-speed communication. Alternatively, the high-speed device may collectively transmit all of the header field 81, the data field 82, and the parity field 83 via the high-speed communication.

Note that a packet transmission source device address is described in the transmission source address field 85, and a packet transmission destination device address is described in the transmission destination address field 86. Alternatively, when multiple packet transmission destination devices are collectively specified, a multicast address "0xFFFF" for specifying all devices or a multicast address for specifying a device group sorted using a particular bit is described as the transmission destination device address.

In the present embodiment, the term "multicast" is used as the collective meaning of transmission to multiple transmission destination devices. For implementing the multicast in a broad sense, narrowly-defined multicast or broadcast given according to the Internet Protocol (IP) may be used, for example.

A table 111 illustrates a description example of the device type field 84 indicating the type of transmission source device. For example, when the transmission source device is the indoor device 21, the device type field 84 describes "0x02" indicating the indoor device. Moreover, "INSTRUMENT" as the device type may be further subdivided based on the equipment type, and different values may be assigned to these sections.

A table 112 illustrates a description example of the communication type field 87 indicating the purpose of a packet. For each value of No. 1 (CONTROL) to No. 6 (HIGH-SPEED COMMUNICATION), either one of ON or OFF can be specified. Thus, the communication type field 87 describes the OR of each value illustrated in Fig. 4. For example, when an attempt is made to simultaneously specify "RESPONSE REQUIRED" and "COLLECTIVE CONTROL," the OR "0x84" of "0x80" and "0x04" is described in the communication type field 87. Moreover, "0x0F" is an undefined value in the low-speed device, and in the high-speed device, indicates that the communication subsequent to the header field 81 is at high speed.

A table 113 illustrates a description example of the data length field 88. When the value of the data length field 88 is 0x0000 to 0x0030, such a value is directly taken as the data length. On the other hand, when the value of the data length field 88 is 0x0040 or more, information (NUMBER OF TIMES OF HIGH-SPEED COMMUNICATION, HIGH-SPEED COMMUNICATION PERIOD) on the high-speed communication can be, as illustrated in Fig. 4, specified only in the case of the high-speed device.

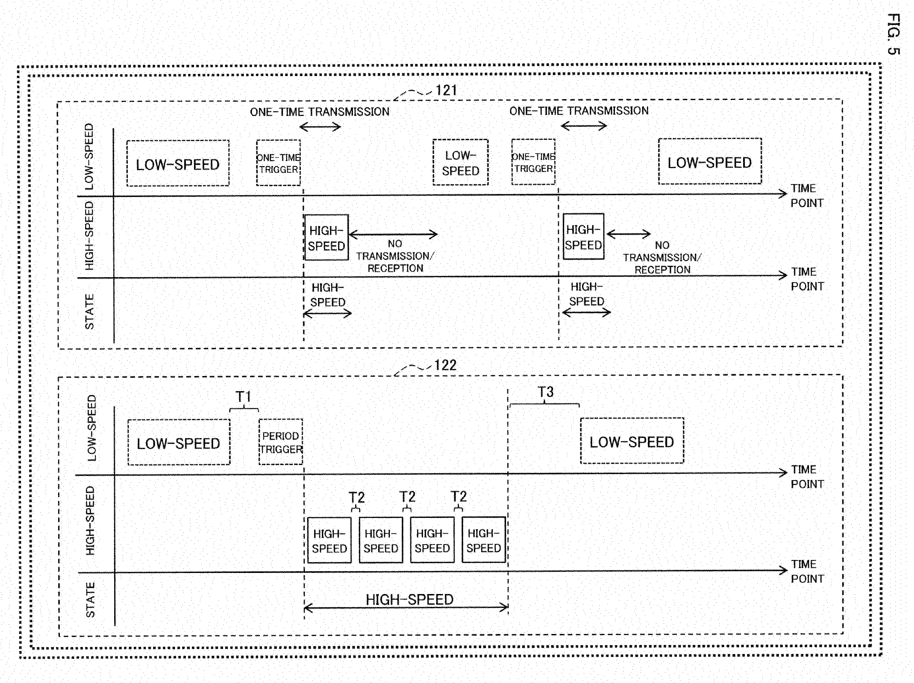

Fig. 5 is a chart for describing the communication mode of the equipment network 5. Each of time-series graphs 121, 122 indicates, in the order from above, a packet transmitted via the low-speed communication, a packet transmitted via the high-speed communication, and the communication mode (the state) of the equipment network 5. Regarding the communication mode of the equipment network 5, a period indicated by "HIGH-SPEED" is the high-speed communication period, and other periods indicate a low-speed communication period.

The time-series graph 121 illustrates an example where the high-speed communication is performed once by a single trigger. After data packet transmission via the low-speed communication, the trigger of allowing one-time high-speed communication is transmitted via the low-speed communication. This trigger is the header field 81 whose communication type field 87 has been set to 0x0F, and will be hereinafter also referred to as a high-speed trigger.

The high-speed device having received the high-speed trigger can prepare for packet reception via the high-speed communication, and therefore, a subsequent packet is transmitted via the high-speed communication. Resulting from non-execution of transmission/reception for a predetermined time after the one-time high-speed communication, the communication mode of the equipment network 5 returns to the normal low-speed communication. Note that even if the low-speed device has received the high-speed trigger, the value of "0x0F" in the communication type field 87 is the undefined value for the low-speed device, and therefore, the high-speed trigger is properly ignored.

The time-series graph 122 illustrates an example where the high-speed communication is performed multiple times by a period trigger. After a lapse of a period T1 after data packet transmission via the low-speed communication, the period trigger of allowing the high-speed communication across a predetermined period is transmitted via the low-speed communication. This trigger is the header field 81 whose communication type field 87 has been set to 0x0F and for which the high-speed communication period (or the number of times of the high-speed communication) has been specified in the data length field 88.

All of the high-speed devices having received the high-speed trigger can prepare for packet transmission/reception via the high-speed communication. The high-speed communication may be performed in any high-speed device within the high-speed communication period. Each packet transmitted via the high-speed communication has an extra period T2 for avoiding interference. After the end of the high-speed communication period, such communication returns to the low-speed communication after a lapse of a non-trial period T3 for which no packet flows via the equipment network 5. Note that the period T1 ≤ the period T3 and the period T2 < the period T3 are satisfied so that data transmission of the low-speed device during the high-speed communication period can be avoided.

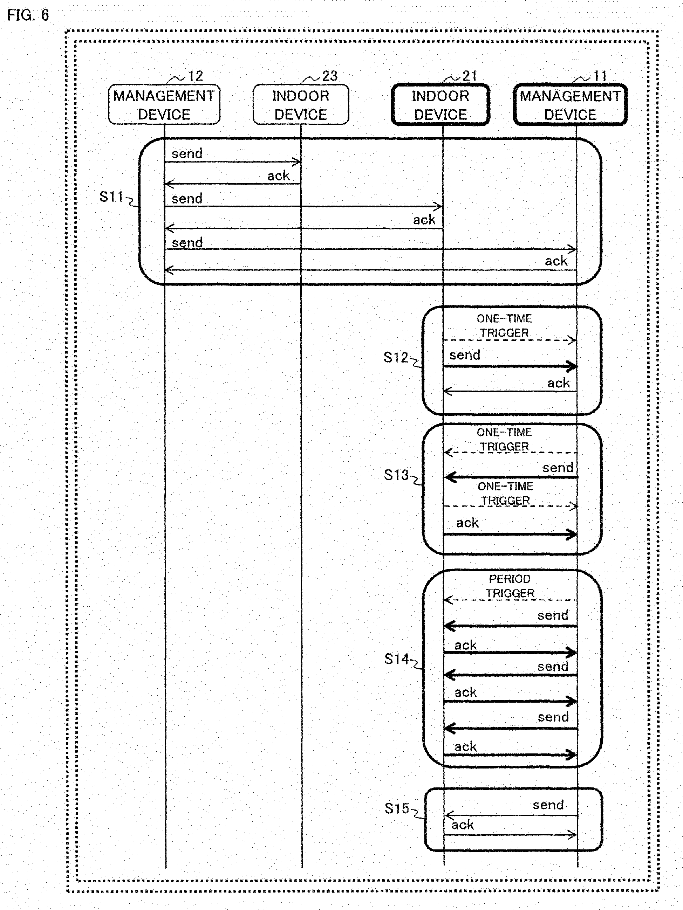

Fig. 6 is a sequence chart of one-to-one communication among the equipped devices. In each sequence chart including Fig. 6, frames surrounding operation subjects on the upper side as viewed in the drawing are, as in Fig. 1, distinctively illustrated such that a thick line indicates the high-speed device and a thin line indicates the low-speed device. Moreover, the operation subjects in each sequence chart are merely examples for the sake of clear description of operation of the high-speed device and operation of the low-speed device, and other devices than those of these examples may be operated as the high-speed devices or the low-speed devices.

At S11, the management device 12 (separately) transmits, on a one-to-one basis, the packet of "RESPONSE REQUIRED" described with reference to the table 112 to each equipped device (the indoor device 23, the indoor device 21, the management device 11) via the low-speed communication (illustrated as "send"). Each equipped device separately makes a packet response to the management device 12 via the low-speed communication (illustrated as "ack").

S12 is an example where only packet transmission is performed via the high-speed communication. The indoor device 21 transmits the one-time high-speed trigger illustrated in the time-series graph 121 to the management device 11 (a dashed arrow indicates the trigger). Accordingly, a subsequent packet is communicated at high speed from the indoor device 21 to the management device 11 (a thick arrow indicates the high-speed communication, and a thin arrow indicates the low-speed communication). Meanwhile, in a packet response from the management device 11 to the indoor device 21, the communication mode returns to the low-speed communication mode.

S13 is an example where a combination of packet transmission and a response thereto is performed via the high-speed communication. As in S12, the management device 11 transmits the high-speed trigger to the indoor device 21, thereby communicating a subsequent packet to the indoor device 21 at high speed. Further, the indoor device 21 transmits the high-speed trigger to the management device 11, thereby transmitting a subsequent response packet to the management device 11.

S14 is an example where the high-speed communication period is specified and a combination of packet transmission and a response thereto is continuously performed via the high-speed communication. The management device 11 transmits the high-speed trigger illustrated in the time-series graph 122 to the indoor device 21, and therefore, packet transmission/reception between the indoor device 21 and the management device 11 is performed via the high-speed communication in the subsequent high-speed communication period.

After the high-speed communication period has elapsed, the mode returns to the low-speed communication. Thus, at S15, packet transmission from the indoor device 21 to the management device 11 and a packet response from the management device 11 to the indoor device 21 are performed via the low-speed communication.

As described above, the high-speed trigger is utilized in Fig. 6 such that the low-speed communication between the low-speed devices, the low-speed communication between the low-speed device and the high-speed device, the low-speed communication between the high-speed devices, and the high-speed communication between the high-speed devices are allowed as the communication on the same equipment network 5. Further, at S14, the high-speed trigger specifying the high-speed communication period is used so that the high-speed communication can be more efficiently performed as compared to the method for transmitting the high-speed trigger each time.

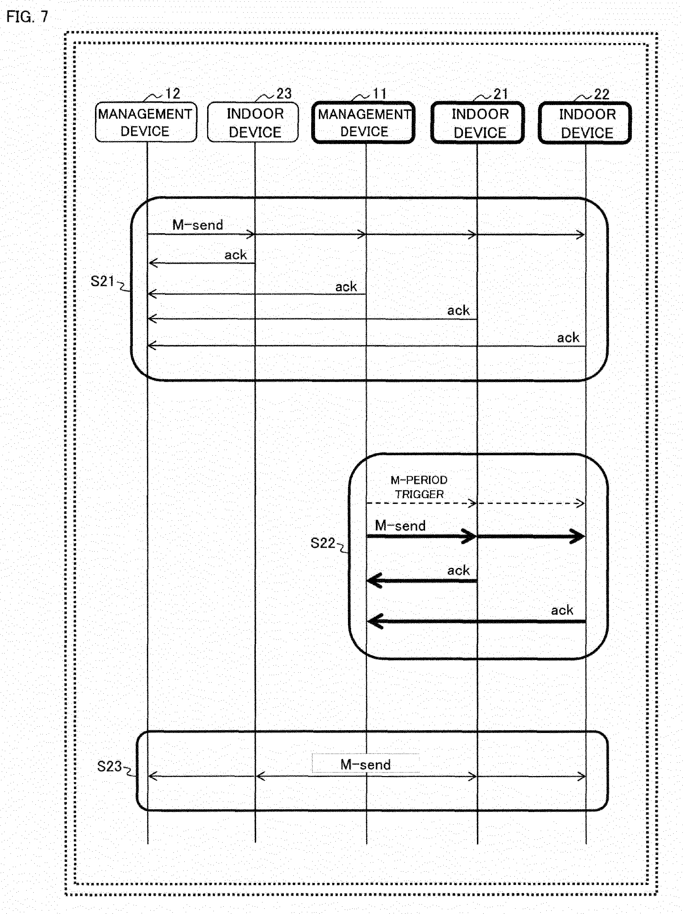

Fig. 7 is a sequence chart of multicast communication among the equipped devices.

At S21, the management device 12 transmits, via the multicast, a response-requiring packet to each equipped device (the indoor device 23, the management device 11, the indoor device 21, the indoor device 22) (in the figure, "send" indicating the transmission packet after "M" indicating the multicast). Each equipped device separately responds to the management device 12 via the low-speed communication. In this case, four packet responses arrive at the single management device 12, and for this reason, each equipped device may make the response after having waited for transmission standby time (offset time) different from that of another device to avoid arrival time interference. The offset time is, for example, calculated from the device address of each equipped device.

At S22, the management device 11 notifies, via the multicast, each high-speed device (the indoor device 21, the indoor device 22) of a response-requiring high-speed trigger specifying the high-speed communication period (illustrated as "M-PERIOD TRIGGER"). Then, the management device 11 communicates the packet to each high-speed device at high speed via the multicast. Each high-speed device separately communicates a response packet at high speed within the high-speed communication period.

At S23, the management device 11 performs, for each equipped device (four right and left devices), multicast transmission requiring no response after the high-speed communication period of S22 has ended.

As described above, in Fig. 7, the multicast communication is used in combination with the high-speed trigger so that collective communication via the low-speed communication or collective communication via the high-speed communication can be performed as communication on the same equipment network 5.

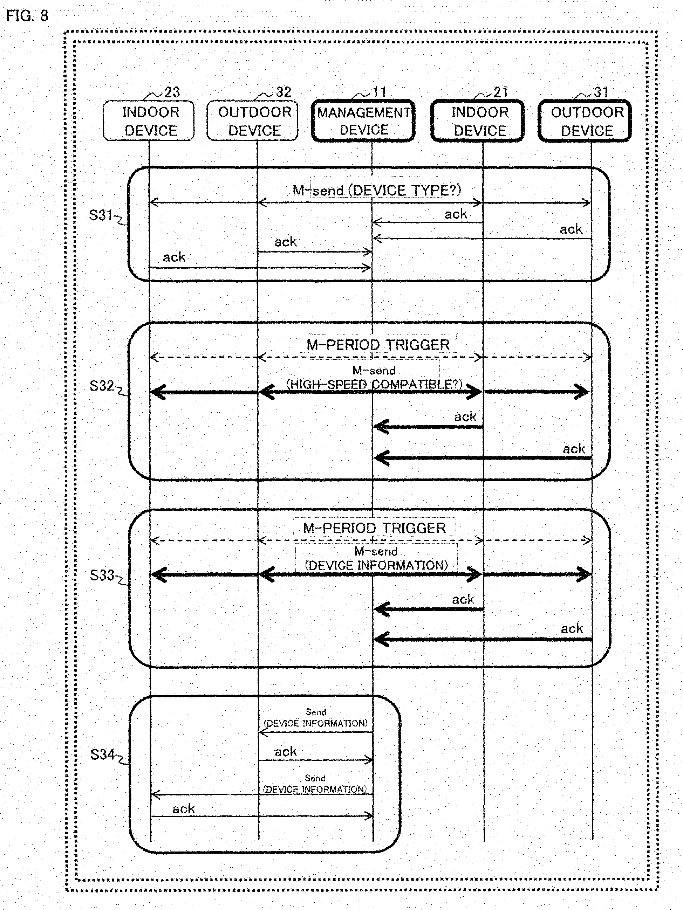

Fig. 8 is an inquiry processing sequence chart for each device of the equipment communication system. Inquiry is such processing that the bandwidth control device causes each of other devices to notify the device type by the device type field 84. An inquiry result is basic data for planning future communication control on the equipment network 5. For example, the high-speed communication can be utilized for unicast to a device whose inquiry result shows the high-speed device to improve a communication efficiency, and the low-speed communication can be utilized for unicast to a device whose inquiry result shows the low-speed device to reliably perform transmission.

Hereinafter, the case of using the management device 11 as the bandwidth control device will be described.

At S31, the management device 11 transmits, via the multicast, a packet specifying "ACQUIRE STATE" and RESPONSE REQUIRED in the communication type field 87 for responding the device type to each equipped device (the indoor device 23, the outdoor device 32, the indoor device 21, and the outdoor device 31) (M-send (DEVICE TYPE?)). Each equipped device separately responds a packet to the management device 12 via the low-speed communication (ack), the packet containing the type of device itself in the device type field 84.

At S32, the management device 11 transmits, via the multicast, a trigger (M-PERIOD TRIGGER) specifying the high-speed communication period to each equipped device to prepare for the high-speed communication. Thereafter, the management device 11 transmits a packet (M-send (HIGH-SPEED COMPATIBLE?)) with "RESPONSE REQUIRED" and "HIGH-SPEED COMMUNICATION" in the communication type field 87 via the multicast high-speed communication. The purpose of transmission of this packet is for checking whether each equipped device is the low-speed device or the high-speed device.

The high-speed device (the indoor device 21, the outdoor device 31) can read "HIGH-SPEED COMMUNICATION" in the communication type field 87, and therefore, responds to the packet via the high-speed communication (ack). The low-speed device (the indoor device 23, the outdoor device 32) cannot read "HIGH-SPEED COMMUNICATION" in the communication type field 87, and therefore, discards such a packet as abnormal data and makes no response. Thus, the management device 11 can grasp that the indoor device 21 and the outdoor device 31 from which the responses have been made are the high-speed devices.

At S33, the management device 11 transmits, via the multicast, the trigger (M-PERIOD TRIGGER) specifying the high-speed communication period to each equipped device to prepare for the high-speed communication. Thereafter, the management device 11 transmits a packet (M-send (DEVICE INFORMATION)) with "RESPONSE REQUIRED" and "NOTIFY STATE" in the communication type field 87 via the multicast high-speed communication. The purpose of transmission of this packet is for checking device information such as the type of each equipped device.

The high-speed device (the indoor device 21, the outdoor device 31) separately responds a packet to the management device 12 via the high-speed communication (ack), the packet containing the device information such as the type of device itself in the device type field 84.

At S34, the management device 11 causes each low-speed device (the indoor device 23, the outdoor device 32) having made no response due to incompatibility with the high-speed communication at S32 to separately notify the device information to the management device 11 (send (DEVICE INFORMATION) and ack). As illustrated in the time-series graph 122 of Fig. 5, the standby time of the period T3 for which no communication is performed is desirably provided between the high-speed communication of S32 and the low-speed communication of S33.

With this configuration, the management device 11 can efficiently collect information on whether or not each equipped device is compatible with the high-speed communication and the device information such as the type of each equipped device.

Fig. 9 is a component graph of the communication volume of the equipment communication system in chronological order.

A time-series graph 131 is one example of time course of a communication data volume of the equipment network 5 monitored by the bandwidth monitoring device 75. The horizontal axis of the graph indicates a time point, and the vertical axis of the graph indicates the communication data volume transmitted/received per unit time. For example, the data volume for a period t4 to t5 is d1, and the data volume for a period t7 to t8 is d2.

In a time-series graph 132, high-speed control communication (a shaded bar graph) and high-speed data distribution (a white bar graph) are assigned to a data volume non-use portion of the time-series graph 131.

For the data volume of the vertical axis, dtMax obtained by subtraction of a predetermined margin from the maximum value of the communication capacity of the equipment network 5 is an upper limit in assignment of the high-speed control communication and the high-speed data distribution. With an extra data volume as the margin described above, communication interference and the probability of occurrence of congestion can be reduced.

For example, the data volume for the period t4 to t5 is dt1, and for this reason, the blank period calculation device 76 calculates that the communication capacity of the equipment network 5 has an extra data volume of (dtMax - dt1). Thus, the blank period calculation device 76 first assigns, by a data volume of (dtlh - dt1), "HIGH-SPEED CONTROL COMMUNICATION" for communicating a high-priority control signal at high speed. The extra communication capacity of the equipment network 5 is (dtMax - dtlh). The cycle number calculation device 77 assigns, by a data volume of (dtMax - dtlh), "HIGH-SPEED DATA DISTRIBUTION" for communicating a low-priority normal data signal at high speed.

Fig. 10 is a chart of the processing of dividing and transmitting a packet subjected to the high-speed data distribution.

Note that as indicated by the reference numeral 141, e.g., a normal data signal of software of the air-conditioner has a great data volume on the transmission side (e.g., #0 to #9), and therefore in many cases, is not within a single packet. For this reason, the cycle number calculation device 77 calculates the number of cycles obtained by division (separation) of a data signal size by a predetermined size (sizes of #0, #1, #2, ... ).

Further, the data division device 78 divides transmission target data based on the number of cycles calculated by the cycle number calculation device 77 and the high-speed data distribution data volume ensured in Fig. 9. Thus, the blank period calculation device 76 divides the high-speed data distribution data volume as the target to be transmitted next by a communication speed in the high-speed communication on the equipment network 5, thereby obtaining the blank period necessary for communication of such a data volume. Then, the cycle number calculation device 77 divides the obtained blank period by the unit time of the cycle, thereby obtaining the number of cycles necessary for communication of the data volume.

Fig. 10 illustrates an example where a single piece of transmission data is divided into four packets PI to P4. For example, the data division device 78 produces a packet PI having a data volume corresponding the blank period of the packet PI such that the packet PI having the total of seven cycles #0 to #6 is transmitted. Note that Fig. 10 also illustrates a black circle mark above packet data (#0 to #6) on a line indicating transmittable timing in each cycle.

As described above, a single file is divided into multiple packets so that an error can be corrected or the packet is retransmitted upon communication failure to stabilize communication. On a reception side for the divided packets PI to P4, the packets are combined in the order of sequential numbers #0, #1, #2, ... , and in this manner, the transmission target data can be recovered.

Note that the sizes of the divided packets PI to P4 are different from each other because of non-use regions where the data volume assigned to the high-speed data distribution varies according to the time period as described with reference to the time-series graph 132 of Fig. 9.

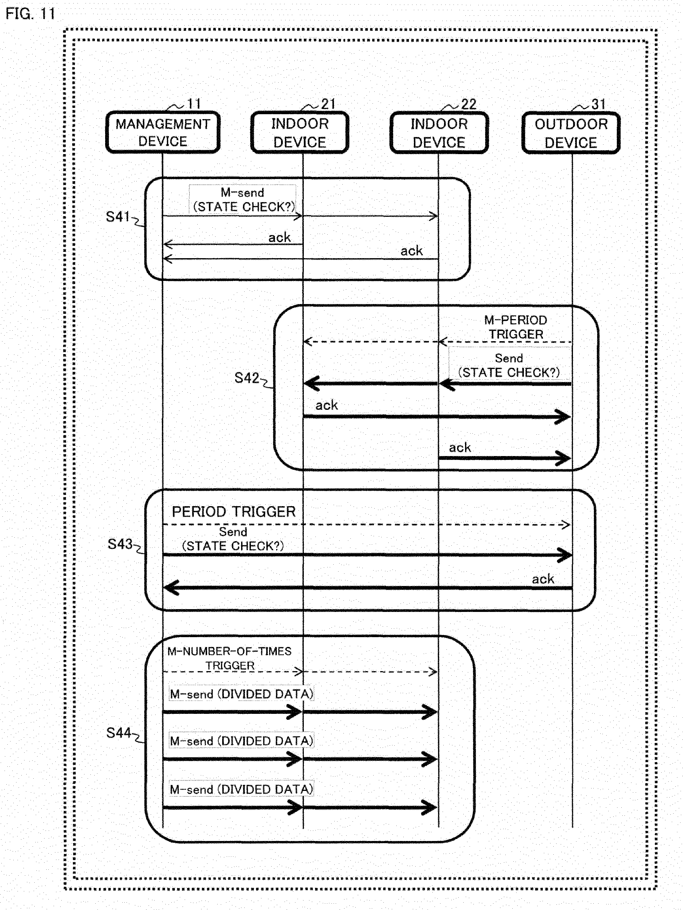

Fig. 11 is a sequence chart of the processing of dividing and transmitting a packet. This sequence chart illustrates operation when the bandwidth control device is the management device 11 and the outdoor device 31.

At S41, the management device 11 transmits, via the multicast low-speed communication, a command (the communication type field 87 = ACQUIRE STATE and RESPONSE REQUIRED) for checking the state to all indoor devices 21 to 26 connected to the equipment network 5, such as the indoor devices 21, 22 (M-send (STATE CHECK?)). At this point, the low-speed communication is used for transmission of the command for checking the state, considering the presence of the indoor device as the low-speed device. Thus, the management device 11 receives a notification (the communication type field 87 = NOTIFY STATE) from each indoor device such as the indoor devices 21, 22 (ack).

At S42, the outdoor device 31 transmits, via the multicast high-speed communication, the command for checking the state by the high-speed trigger (M-PERIOD TRIGGER) specifying the high-speed communication period to the indoor devices 21, 22 in the same first group 8a (M-send (STATE CHECK?)). Accordingly, the outdoor device 31 receives a notification (the communication type field 87 = NOTIFY STATE) similar to that of S41 from the indoor devices 21, 22 (ack).

At S43, the management device 11 also receives, as in S41, a response (ack) to the command for checking the state from the outdoor device 31. At this point, the management device 11 and the outdoor device 31 are both the high-speed devices, and therefore, the high-speed communication using the high-speed trigger specifying the high-speed communication period can be used.

At S44, the management device 11 divides a single piece of transmission data into multiple (three in this case) packets according to the number of cycles calculated based on the data communication volume (the data volume in the time-series graph 131) acquired by monitoring of, e.g., each type of communication at S41 to S43 by the bandwidth monitoring device 75. Then, the management device 11 transmits, to the indoor devices 21, 22, a number-of-times trigger (M-NUMBER-OF-TIMES TRIGGER) specified in the data length field 88 specifying the number of times of the high-speed communication = 3 as the number of cycles, and thereafter, transmits these three divided packets to the indoor devices 21, 22 via the high-speed communication (M-send (DIVIDED DATA)). In fourth packet transmission or later, the equipment network 5 returns to a low-speed communication state.

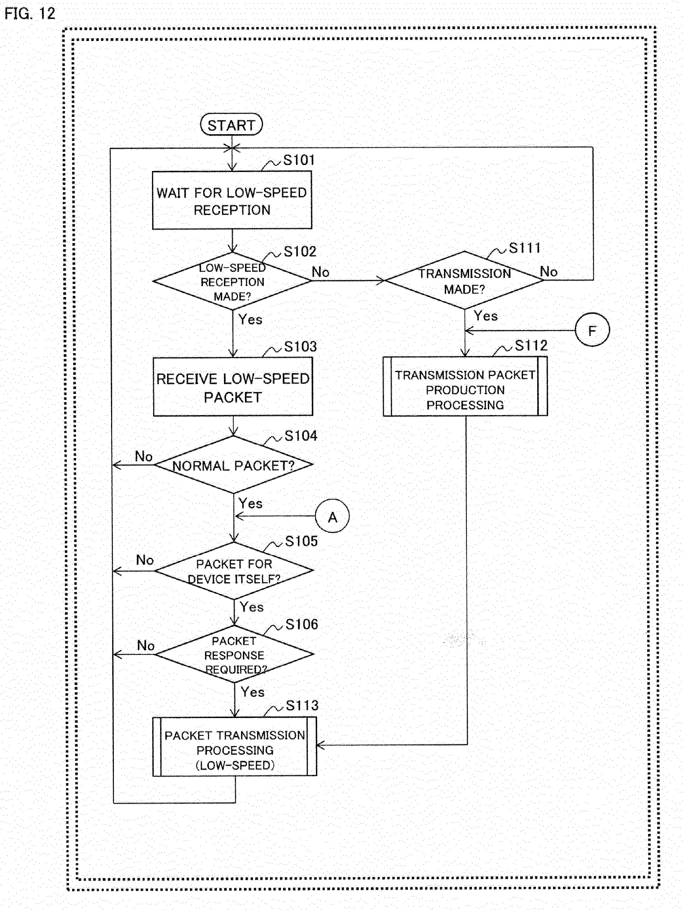

Fig. 12 is a flowchart of transmission/reception processing of the low-speed device. Hereinafter, a packet to be transmitted via the low-speed communication will be referred to as a "low-speed packet," and a packet to be transmitted via the high-speed communication will be referred to as a "high-speed packet."

At S101, the low-speed device waits for reception of the low-speed packet.

At S102, the low-speed device determines whether or not the low-speed packet has been received. In the case of Yes at S102, the processing proceeds to S103. In the case of No at S102, the processing proceeds to S111.

At S103, the low-speed device receives the low-speed packet.

At S104, the low-speed device determines whether or not the received packet is normal. In the case of Yes at Sl04, the processing proceeds to S105. In the case of No at S104, the processing returns to S101.

At S105, the low-speed device determines whether or not the received packet is for the device itself. When the transmission destination address field 86 of the received packet describes the address of the device itself or the multicast address to which the device itself belongs, the received packet is for the device itself. In the case of Yes at S105, the processing proceeds to S106. In the case of No at S105, the processing returns to S101.

At S106, the low-speed device determines whether or not a response to the received packet is necessary after the processing based on the received packet has been performed. In the case of Yes at S106, the processing proceeds to S113. In the case of No at S106, the processing returns to S101.

At S111, the low-speed device determines whether or not the packet transmitted from the device itself is present. In the case of Yes at S111, the processing proceeds to S112. In the case of No at S111, the processing returns to S101.

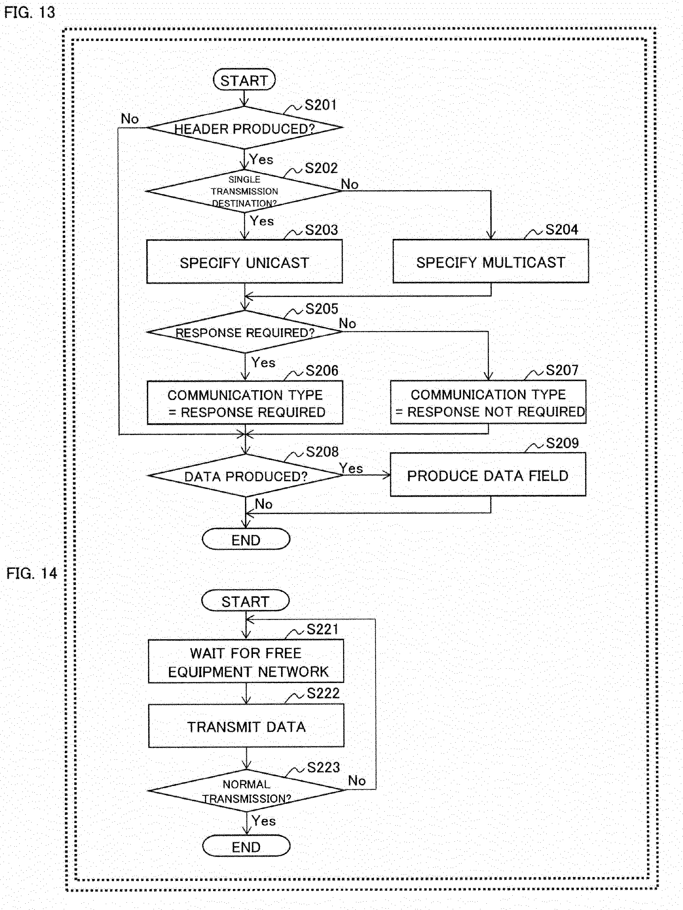

At S112, the low-speed device performs the processing (for details, see Fig. 13) of producing a packet (a transmission packet) to be transmitted next.

At S113, the low-speed device performs, after a lapse of the standby time of the period T3, packet transmission processing (for details, see Fig. 14) for the packet newly produced at S112 or the response packet at S106.

Fig. 13 is a flowchart of details of the transmission packet production processing. Hereinafter, an operation subject of this flowchart will be described as an equipped instrument as a packet transmission source.

At S201, the equipped instrument determines whether or not the header of the transmission packet is to be produced. In the case of Yes at S201, the processing proceeds to S202. In the case of No at S201, the processing proceeds to S208.

At S202, the equipped instrument determines whether or not the destination of the transmission packet is one (or more). In the case of Yes at S202, the processing proceeds to S203. In the case of No at S202, the processing proceeds to S204.

At S203, the equipped instrument describes, as the unicast, a single address as the transmission destination in the header field 81 of the transmission packet.

At S204, the equipped instrument describes, as the multicast, addresses indicating multiple transmission destinations in the header field 81 of the transmission packet.

At S205, the equipped instrument determines whether or not a response to the transmission packet is necessary. In the case of Yes at S205, the processing proceeds to S206. In the case of No at S205, the processing proceeds to S207.

At S206, the equipped instrument describes RESPONSE REQUIRED in the communication type field 87 of the transmission packet.

At S207, the equipped instrument does not describe RESPONSE REQUIRED in the communication type field 87 of the transmission packet. Note that in the communication type field 87, other necessary type values listed in Fig. 4 may be described.

At S208, the equipped instrument determines whether or not transmission packet data is to be produced. In a case where only the header field 81 is transmitted in advance, No is selected at this branching point. In the case of Yes at S208, the processing proceeds to S209. In the case of No at S208, the processing ends.

At S209, the equipped instrument produces the data field 82 and the data length field 88 of the transmission packet.

Fig. 14 is a flowchart of details of the packet transmission processing.

At S221, the equipped instrument waits for the period (any one of T1, T2, or T3) specified from an invoking source of the flowchart of Fig. 14, and therefore, the equipment network 5 becomes free for communication.

At S222, the equipped instrument transmits the transmission packet (data) to the equipment network 5. At this point, a choice of whether the high-speed communication or the low-speed communication is to be performed is as specified from the invoking source of the flowchart of Fig. 14.

At S223, the equipped instrument determines whether or not the data of S22 has been normally transmitted. In the case of Yes at S223, the processing ends. In the case of No at S223, the processing returns to S221. Note that even when data retransmission is repeated multiple times, if the data cannot be normally transmitted, such a state is taken as an abnormal state, and retransmission is terminated.

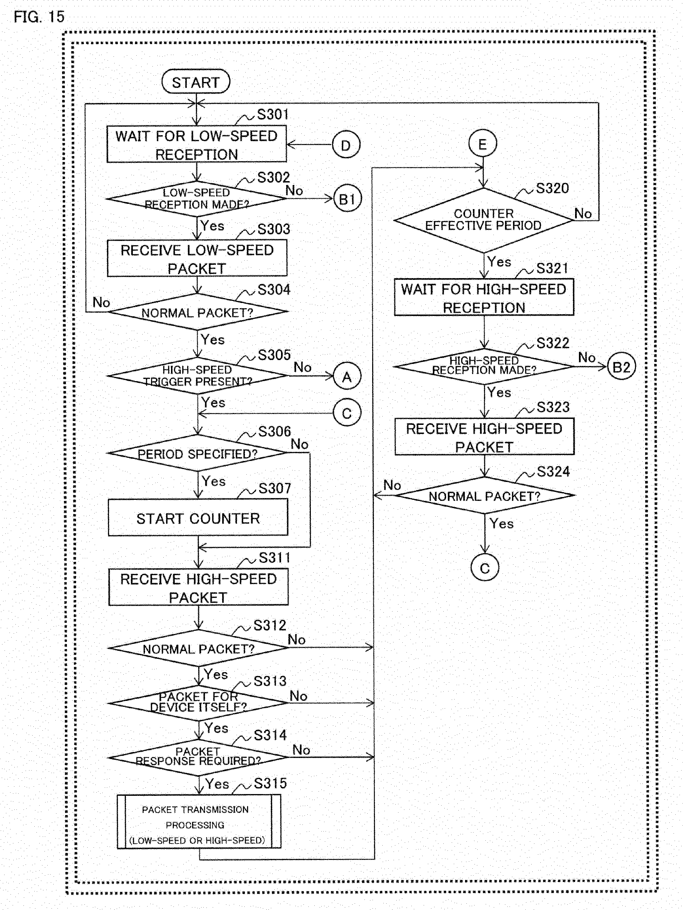

Fig. 15 is a flowchart of reception processing of the high-speed device.

At S301, the high-speed device waits for reception of the low-speed packet.

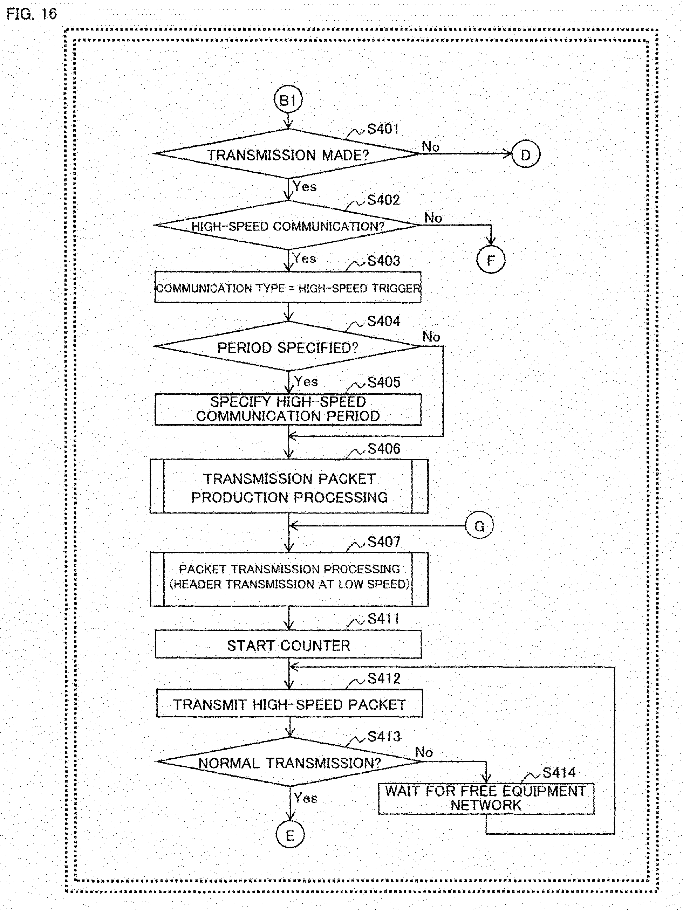

At S302, the high-speed device determines whether or not the low-speed packet has been received. In the case of Yes at S302, the processing proceeds to S303. In the case of No at S302, the processing proceeds to a terminal B1 (S401 of Fig. 16).

At S303, the high-speed device receives the low-speed packet. This low-speed packet is, for example, the high-speed trigger of preparing for the high-speed communication.

At S304, the high-speed device determines whether or not the received packet is normal. In the case of Yes at S304, the processing proceeds to S305. In the case of No at S304, the processing returns to S301.

At S305, the high-speed device determines whether or not the high-speed trigger has been specified for the received packet. In the case of Yes at S305, the processing proceeds to S306. In the case of No at S305, the processing proceeds to a terminal A (S105 of Fig. 12). Note that when the processing returns to S101 after the processing has been executed from the terminal A, the processing does not return to S101, but returns to S301.

At S306, the high-speed device determines whether or not the high-speed communication period has been specified for the received high-speed trigger. In the case of Yes at S306, the processing proceeds to S307. In the case of No at S306, the processing proceeds to S311.

At S307, the high-speed device starts a counter for the high-speed communication period (or the number of times of high-speed transmission/reception). This counter is constantly monitored independently of, e.g., the present processing of the flowchart of Fig. 15, and is updated so that the high-speed communication can be performed within a specified range.

At S311, the high-speed device receives the high-speed packet.

At S312, the high-speed device determines whether or not the received high-speed packet is normal. In the case of Yes at S312, the processing proceeds to S313. In the case of No at S312, the processing proceeds to S320.

At S313, the high-speed device determines whether or not the received high-speed packet is for the device itself. In the case of Yes at S313, the processing proceeds to S314. In the case of No at S313, the processing proceeds to S320.

At S314, the high-speed device determines whether or not a response to the received packet is necessary after the processing based on the received packet has been performed. In the case of Yes at S314, the processing proceeds to S315. In the case of No at S314, the processing proceeds to S320.

At S315, the high-speed device specifies the predetermined standby time (the period T1 during the low-speed communication, the period T2 during the high-speed communication) to invoke the packet transmission processing of Fig. 14, thereby transmitting the response packet of "RESPONSE REQUIRED."

At S320, the high-speed device determines whether or not the counter of S307 is currently an effective period (or the effective number of times). In the case of Yes at S320, the processing proceeds to S321. In the case of No at S320, the processing returns to S301.

At S321, the high-speed device waits for reception of the high-speed packet.

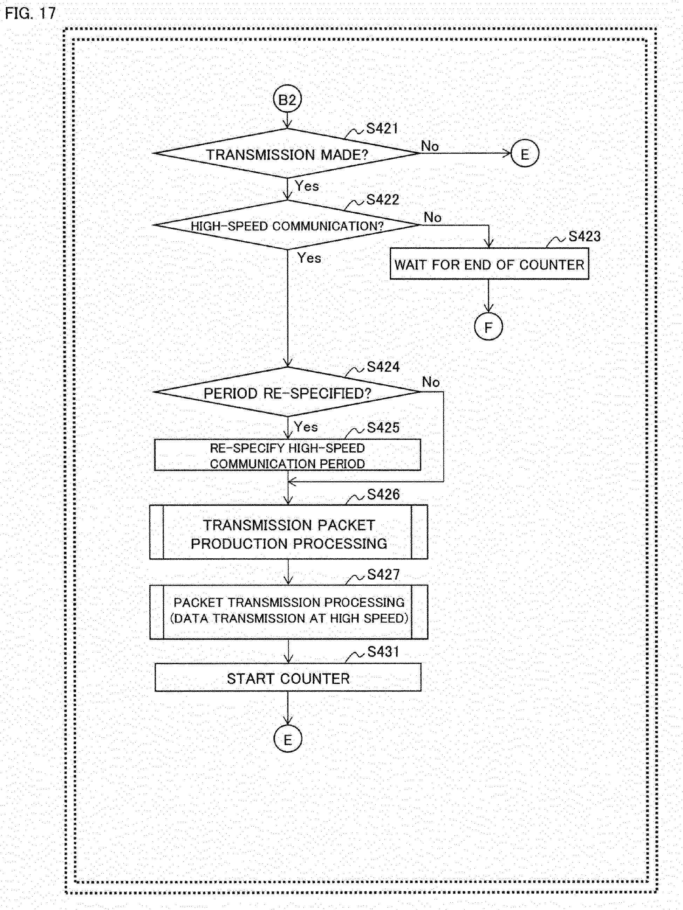

At S322, the high-speed device determines whether or not the high-speed packet has been received. In the case of Yes at S322, the processing proceeds to S323. In the case of No at S322, the processing proceeds to a terminal B2 (S421 of Fig. 17).

At S323, the high-speed device receives the high-speed packet.

At S324, the high-speed device determines whether or not the received packet is normal. In the case of Yes at S324, the processing returns to a terminal C (S306). In the case of No at S324, the processing returns to S320.

Fig. 16 is a flowchart of initial transmission processing when the transmission processing of the high-speed device is continuously performed multiple times.

At S401, the high-speed device determines whether or not a packet to be transmitted from the device itself is present. In the case of Yes at S401, the processing proceeds to S402. In the case of No at S401, the processing proceeds to a terminal D (S301 of Fig. 15).

At S402, the high-speed device determines whether or not the high-speed communication is to be performed. In the case of Yes at S402, the processing proceeds to S403. In the case of No at S402, the processing proceeds to a terminal F (S112 of Fig. 12). Note that the processing returns to S301 instead of returning to S101 in the flow of Fig. 12.

At S403, the high-speed device sets the high-speed trigger to the communication type field 87 of the transmission packet.

At S404, the high-speed device determines whether or not the high-speed communication period is to be specified. In the case of Yes at S404, the processing proceeds to S405. In the case of No at S404, the processing proceeds to S406.

At S405, the high-speed device sets the high-speed communication period (or the number of times of the high-speed communication) to the data length field 88 of the transmission packet.

At S406, the high-speed device produces a transmission packet containing the data field 82 of the high-speed trigger.

At S407, the high-speed device transmits the packet produced at S406 after having waited for the standby time T3.

At S411, the high-speed device starts the counter for the high-speed communication period as in S307. Note that in the case of not specifying the high-speed communication period, the present step is omitted.

At S412, the high-speed device transmits the communication data via the high-speed communication.

At S413, the high-speed device determines whether or not transmission has been normally performed at S412. In the case of Yes at S413, the processing proceeds to a terminal E (S320 of Fig. 15). In the case of No at S413, the processing proceeds to S414. Note that even when retransmission is repeated multiple times, if the data cannot be normally transmitted, such a state is taken as the abnormal state, and retransmission is terminated.

At S414, the high-speed device waits for the standby time T2 until the equipment network 5 becomes free, and returns the processing to S412.

Fig. 17 is a flowchart of second high-speed device transmission processing or later.

At S421, the high-speed device determines whether or not the packet to be transmitted from the device itself is present. In the case of Yes at S421, the processing proceeds to S422. In the case of No at S421, the processing proceeds to the terminal E (S320 of Fig. 15).

At S422, the high-speed device determines whether or not the high-speed communication is to be performed. In the case of Yes at S422, the processing proceeds to S424. In the case of No at S422, the processing proceeds to S423.

At S423, the high-speed device proceeds to the terminal F (S112 of Fig. 12) after having waited for the end of the counter for the high-speed communication period. Note that the processing returns to S301 instead of returning to S101 at the flow of Fig. 12.

At S424, the high-speed device determines whether or not the current high-speed communication period is to be reviewed. In the case of Yes at S424, the processing proceeds to S425. In the case of No at S424, the processing proceeds to S426.

At S425, the high-speed device re-specifies the high-speed communication period in the data length field 88 of the transmission packet.

At S426, the high-speed device produces a transmission packet containing the communication data.

At S427, the high-speed device transmits the packet via the high-speed communication after having waited for the standby time T2.

At S431, the high-speed device starts, as in S411, the counter for the reset high-speed communication period, and the processing proceeds to the terminal E (S320 of Fig. 15).

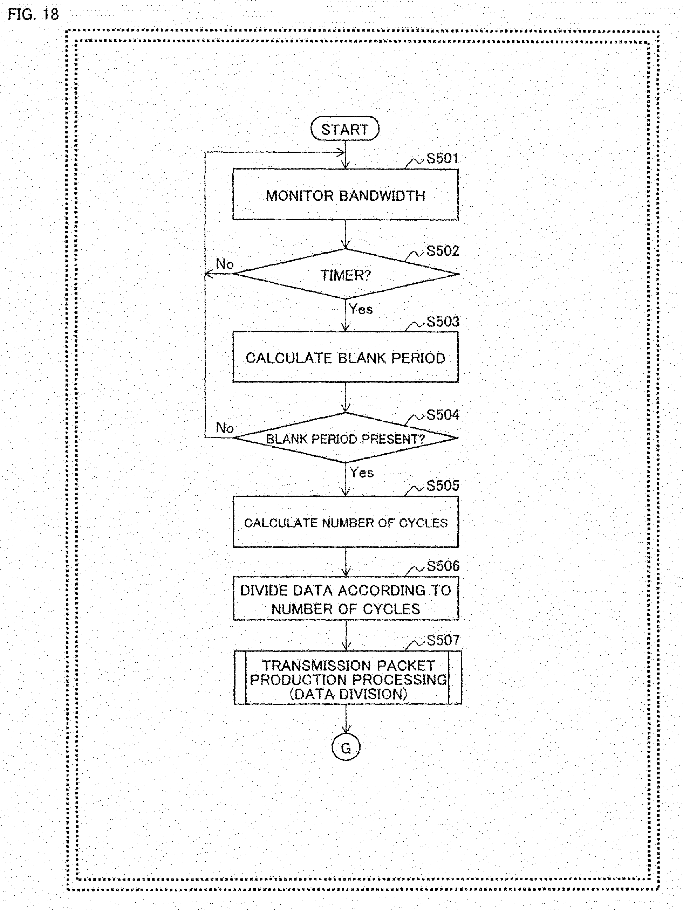

Fig. 18 is a flowchart of data division processing based on the communication volume of the equipment communication system.

At S501, the bandwidth monitoring device 75 of the bandwidth control device monitors the bandwidth (the data communication volume) of the equipment network 5.

At S502, the bandwidth control device continuously performs bandwidth monitoring of S501 until reaching a predetermined period measured by a timer.

At S503, the blank period calculation device 76 of the bandwidth control device calculates the blank period of the communication period based on the data communication volume in the predetermined period measured at S501, S502 (described with reference to Fig. 9).

At S504, the bandwidth control device determines, for each time period, whether or not the blank period calculated at S503 is present. For example, for time points t7 to t8 of Fig. 9, the data volume for the low-speed communication is used to the level of the margin, and therefore, there is no blank period. On the other hand, for the time points t8 to t9, there is an extra data volume for the low-speed communication, and therefore, the blank period is present. In the case of Yes at S504, the processing proceeds to S505. In the case of No at S504, the processing returns to S501.

At S505, the cycle number calculation device 77 of the bandwidth control device calculates the number of cycles of the high-speed communication based on the blank period of S503 (described with reference to Fig. 10). Note that the cycle number calculation device 77 may calculate the high-speed communication period instead of calculating the number of cycles of the high-speed communication.

At S506, the data division device 78 of the bandwidth control device divides the data based on the number of cycles of S505, thereby generating divided packets.

At S507, the communication controller 74 of the bandwidth control device transmits the divided packets of S506. Note that the processing of transmitting the divided packets may be applied not only to the high-speed data distribution of Fig. 9 but also to the high-speed control communication.

In the equipment communication system of the present embodiment as described above, even when the low-speed devices and the high-speed devices are mixed on the equipment network 5, the communication mode is switched by the high-speed trigger as necessary. The low-speed devices and the high-speed devices can be differently used on the same equipment network 5, and therefore, the availability of the system can be enhanced.

Moreover, even the outdoor device is, such as the outdoor device having the mechanism of the bandwidth control device, configured without limitations on the device type of "the outdoor device, the indoor device, the management device, and the instrument" and the functions of "the low-speed device, the high-speed device, and the bandwidth control device" in communication control, and therefore, bidirectional communication can be implemented.

Further, collective specifying (the number of times of the high-speed communication, the high-speed communication period) for collectively performing the high-speed communication for multiple cycles of packet transmission eliminates, as a high-speed trigger option, the necessity of transmitting the high-speed trigger each time, and therefore, the network efficiency of the equipment network 5 can be enhanced.

As illustrated in Fig. 9, the bandwidth control device plans each type of communication with the degree of priority such that the high-speed control communication is assigned to the blank period for the low-speed communication and the high-speed data distribution is assigned to the blank period for the high-speed control communication. With this configuration, a bandwidth for communication with the highest degree of priority, i.e., entire air-conditioning system control performed via the low-speed communication, is not restricted by other types of communication. Moreover, in the high-speed data distribution, software with a low degree of urgency can be distributed.

Note that the present invention is not limited to the above-described embodiment, and includes various modifications, as long as they do not depart from the scope of the invention as it is depicted by the appended claims.

Moreover, some of configurations of a certain embodiment may be replaced with configurations of other embodiments, and configurations of other embodiments may be added to configurations of a certain embodiment as long as they do not depart from the scope of the invention as it is depicted by the appended claims.

Further, addition/omission/replacement of other configurations may be made to some of configurations of each embodiment as long as they do not depart from the scope of the invention as it is depicted by the appended claims.

In addition, the configurations, functions, processing devices, processing sections, etc. described above may be implemented by hardware in such a manner that some or all of them are designed using an integrated circuit, for example.

Moreover, the configurations and functions described above may be implemented by software in such a manner that a processor interprets and executes a program for implementing each function.

Information on a program, table, file, etc. for implementing each function may be in a recording device such as a memory, a hard drive, or a solid state drive (SSD) or a recording medium such as an integrated circuit (IC) card, a SD card, or a digital versatile disc (DVD).

Moreover, control lines or information lines necessary for description are illustrated, and all control lines or information lines for a product are not necessarily illustrated. In fact, it is considered that almost all configurations are connected to each other.

Further, a communication section connecting each device is not limited to a wireless LAN, and may be changed to a wired LAN or other communication sections.

### DESCRIPTION OF REFERENCE SIGNS

- 5: equipment network
- 9: higher-level device
- 11, 12: management device
- 21 to 26: indoor device
- 31, 32: outdoor device
- 41, 42: instrument
- 51: storage device
- 52: load device
- 53: input/output device
- 54: controller
- 61: output device
- 62: speed switching instruction device
- 63: input device
- 70: bandwidth controller
- 71: transmission device
- 72: speed determination device
- 73: reception device
- 74: communication controller
- 75: bandwidth monitoring device
- 76: blank period calculation device (free space calculation device)
- 77: cycle number calculation device (communication assignment device)
- 78: data division device
- 81: header field
- 82: data field
- 83: parity field
- 84: device type field
- 85: transmission source address field
- 86: transmission destination address field
- 87: communication type field
- 88: data length field

## Claims

1. A communication control device for controlling communication on an equipment network (5) on which a first equipped device having a communication capacity corresponding to a first communication, and a second equipped device that can switch between having
a communication capacity corresponding to the first communication and having a higher-speed communication capacity than that of the first equipped device corresponding to a second communication are connected to each other, **characterized by** comprising:
a communication assignment device (77) configured to assign a free space of the equipment network (5) not used by first communication performed by the first equipped device to second communication performed by the second equipped device; and
a communication controller (74) configured to transmit a trigger signal for switching a communication mode of the equipment network (5) from the first communication to the second communication, wherein
the communication controller (74) is configured to switch a communication mode of the equipment network (5) from the second communication to the first communication after the end of a predetermined time after the second communication.

2. The communication control device according to claim 1, further comprising:
a data division device (78) configured to divide, when a greater data volume than a transmittable data volume in a time period for the second communication is transmitted, transmission target data into non-continuous multiple data volumes transmittable in the time period for the second communication, thereby separately transmitting divided data pieces at multiple time periods for the second communication.

3. The communication control device according to claim 1, wherein
the communication controller (74)
transmits, as a signal to be transmitted via the first communication, a control signal for the first equipped device and the second equipped device, and
transmits, as a signal to be transmitted via the second communication, an update signal for software operating in the second equipped device.

4. The communication control device according to claim 1, wherein
the communication controller (74) transmits, as the trigger signal for switching the communication mode of the equipment network (5), a period-specifying trigger signal for allowing execution of the second communication by the second equipped device connected to the equipment network (5) in a predetermined period starting from the trigger signal.

5. The communication control device according to any one of claims 1 to 4, wherein
the communication controller (74) transmits, to each equipped device connected to the equipment network (5), an inquiry signal for causing each equipped device to make a response regarding whether each equipped device itself is the first equipped device or the second equipped device, thereby determining, based on the response to the inquiry signal, whether the first communication or the second communication is to be used for each equipped device.

6. An equipment communication system wherein
the communication control device according to any one of claims 1 to 5 is built in any of the first equipped device and the second equipped device, and
the first equipped device and the second equipped device are connected to each other via the equipment network (5).

## Patentansprüche

1. Kommunikationssteuervorrichtung zum Steuern einer Kommunikation auf einem Gerätenetz (5), auf dem eine erste Gerätevorrichtung mit einer Kommunikationskapazität, die einer ersten Kommunikation entspricht, und eine zweite Gerätevorrichtung, die zwischen Aufweisen einer Kommunikationskapazität, die der ersten Kommunikation entspricht, und Aufweisen einer Kommunikationskapazität mit einer höheren Geschwindigkeit als die der ersten Gerätevorrichtung, die einer zweiten Kommunikation entspricht, wechseln kann, miteinander verbunden sind, **gekennzeichnet durch**:
eine Kommunikationszuweisungsvorrichtung (77), die konfiguriert ist, einen freien Raum des Gerätenetzes (5), der nicht durch die erste Kommunikation verwendet wird, die durch die erste Gerätevorrichtung ausgeführt wird, der zweiten Kommunikation, die durch die zweite Gerätevorrichtung ausgeführt wird, zuzuweisen; und
eine Kommunikationssteuereinheit (74), die konfiguriert ist, ein Auslösesignal für das Wechseln einer Kommunikationsbetriebsart des Gerätenetzes (5) von der ersten Kommunikation zu der zweiten Kommunikation zu senden, wobei
die Kommunikationssteuereinheit (74) konfiguriert ist, eine Kommunikationsbetriebsart des Gerätenetzes (5) nach dem Ende einer vorgegebenen Zeit nach der zweiten Kommunikation von der zweiten Kommunikation zu der ersten Kommunikation zu wechseln.

2. Kommunikationssteuervorrichtung nach Anspruch 1, die ferner umfasst:
eine Datenunterteilungsvorrichtung (78), die konfiguriert ist, dann, wenn ein größeres Datenvolumen als ein sendbares Datenvolumen in einer Zeitperiode für die zweite Kommunikation gesendet wird, Übertragungszieldaten in nicht zusammenhängende mehrere Datenvolumen, die in der Zeitperiode für die zweite Kommunikation sendbar sind, zu unterteilen, wodurch die unterteilten Datenteile zu mehreren Zeitperioden für die zweite Kommunikation gesendet werden.

3. Kommunikationssteuervorrichtung nach Anspruch 1, wobei
die Kommunikationssteuereinheit (74)
als ein über die erste Kommunikation zu sendendes Signal ein Steuersignal für die erste Gerätevorrichtung und die zweite Gerätevorrichtung sendet und
als ein über die zweite Kommunikation zu sendendes Signal ein Aktualisierungssignal für Software, die in der zweiten Gerätevorrichtung arbeitet, sendet.

4. Kommunikationssteuervorrichtung nach Anspruch 1, wobei
die Kommunikationssteuereinheit (74) als das Auslösesignal zum Wechseln der Kommunikationsbetriebsart des Gerätenetzes (5) ein periodespezifizierendes Auslösesignal sendet, um die Ausführung der zweiten Kommunikation durch die zweite Gerätevorrichtung, die mit dem Gerätenetz (5) verbunden ist, in einer vorgegebenen Periode, die ab dem Auslösesignal startet, zu erlauben.

5. Kommunikationssteuervorrichtung nach einem der Ansprüche 1 bis 4, wobei
die Kommunikationssteuereinheit (74) an jede Gerätevorrichtung, die mit dem Gerätenetz (5) verbunden ist, ein Abfragesignal sendet, um zu bewirken, dass jede Gerätevorrichtung eine Antwort bezüglich dessen, ob jede Gerätevorrichtung selbst die erste Gerätevorrichtung oder die zweite Gerätevorrichtung ist, gibt, wodurch anhand der Antwort auf das Abfragesignal bestimmt wird, ob die erste Kommunikation oder die zweite Kommunikation für jede Gerätevorrichtung zu verwenden ist.

6. Gerätekommunikationssystem, wobei
die Kommunikationssteuervorrichtung nach einem der Ansprüche 1 bis 5 in eine beliebige der ersten Gerätevorrichtung und der zweiten Gerätevorrichtung eingebaut ist und
die erste Gerätevorrichtung und die zweite Gerätevorrichtung miteinander über das Gerätenetz (5) verbunden sind.

## Revendications

1. Dispositif de commande de communication destiné à commander une communication sur un réseau d'équipements (5) sur lequel un premier dispositif équipé, ayant une capacité de communication correspondant à une première communication, et un second dispositif équipé, qui peut commuter entre avoir une capacité de communication correspondant à la première communication et avoir une capacité de communication à une vitesse plus élevée que celle du premier dispositif équipé correspondant à une seconde communication, sont connectés l'un à l'autre, **caractérisé en ce qu'**il comprend :
un dispositif d'affectation de communication (77) configuré pour affecter un espace libre du réseau d'équipements (5) non utilisé par la première communication effectuée par le premier dispositif équipé à la seconde communication effectuée par le second dispositif équipé ; et
un contrôleur de communication (74) configuré pour transmettre un signal déclencheur destiné à commuter un mode de communication du réseau d'équipements (5) depuis la première communication vers la seconde communication, dans lequel
le contrôleur de communication (74) est configuré pour commuter un mode de communication du réseau d'équipements (5) depuis la seconde communication vers la première communication après la fin d'un temps prédéterminé après la seconde communication.

2. Dispositif de commande de communication selon la revendication 1, comprenant en outre :
un dispositif de division de données (78) configuré pour diviser, quand un volume de données plus grand qu'un volume de données transmissibles dans une période temporelle pour la seconde communication est transmis,
des données cibles de transmission en de multiples volumes de données non continus transmissibles dans la période temporelle pour la seconde communication, transmettant ainsi séparément des éléments de données divisées à de multiples périodes temporelles pour la seconde communication.

3. Dispositif de commande de communication selon la revendication 1, dans lequel
le contrôleur de communication (74)
transmet, à titre de signal devant être transmis via la première communication, un signal de commande pour le premier dispositif équipé et le second dispositif équipé, et
transmet, à titre de signal devant être transmis via la seconde communication, un signal de mise à jour pour un logiciel fonctionnant dans le second dispositif équipé.

4. Dispositif de commande de communication selon la revendication 1, dans lequel
le contrôleur de communication (74) transmet, à titre de signal déclencheur destiné à commuter le mode de communication du réseau d'équipements (5), un signal déclencheur de spécification de période destiné à permettre une exécution de la seconde communication par le second dispositif équipé connecté au réseau d'équipements (5) dans une période prédéterminée démarrant à partir du signal déclencheur.

5. Dispositif de commande de communication selon l'une quelconque des revendications 1 à 4, dans lequel
le contrôleur de communication (74) transmet, vers chaque dispositif équipé connecté au réseau d'équipements (5), un signal de requête destiné à amener chaque dispositif équipé à faire une réponse concernant le fait de savoir si chaque dispositif équipé lui-même est le premier dispositif équipé ou le second dispositif équipé, déterminant ainsi, sur la base de la réponse du signal de requête, si la première communication ou la seconde communication doit être utilisée pour chaque dispositif équipé.

6. Système de communication d'équipements dans lequel
le dispositif de commande de communication selon l'une quelconque des revendications 1 à 5 est intégré dans l'un quelconque du premier dispositif équipé et du second dispositif équipé, et
le premier dispositif équipé et le second dispositif équipé sont connectés l'un à l'autre via le réseau d'équipements (5).
